# EUROPEAN PATENT SPECIFICATION

(11) **EP 1 238 832 B1**
(45) Date of publication and mention of the grant of the patent: **26.07.2006**
(21) Application number: 01115962.1
(22) Date of filing: 29.06.2001
(51) Int. Cl.: B60C 27/06

(54) **Skid chain provided with a removable extension for ease of mounting and extension therefor**
Gleitschutzkette mit abnehmbarer Verlängerung zur Vereinfachung des Anbaus und Verlängerung dafür
Chaîne anti-dérapante avec extension amovible pour faciliter le montage et extension à cet effet

(30) Priority: 08.03.2001 IT MI010131 U
(43) Date of publication of application: 11.09.2002
(73) Proprietor: MAGGI CATENE S.p.A., 23854 Olginate (LECCO) (IT)
(72) Inventor: Maggi, Corrado, 23896 Sirtori (IT)
(74) Representative: Faggioni, Marco

(56) References cited:
- EP-A- 0 291 771

## Description

The present invention relates to a snow chain, otherwise called an anti-skid chain, provided with a device which facilitates the mounting thereof on vehicle tyres.

As is known, skid chains for tyres are composed normally of an external element and an internal element which are parallel and can be closed in a loop and between which transverse gripping elements - namely the elements actually designed to perform the anti-skid function - which are intended to adhere to the exposed part of the tyre tread extend. Such a shown chain according to the preamble of claim 1 is disclosed in EP-A-0291771.

While the external element assumes the most varied forms - although being essentially, in most cases, a section of steel chain - the internal element is often simply a flexible cable to which the ends of the transverse gripping elements are fastened.

The cable of the internal element has, at its ends, clamping means which allow it to be closed firmly in a continuous loop, after being positioned on the tyre.

Normally the clamping means are composed, on the one hand, of a cylindrical boss and, on the other hand, of a partially open sleeve inside which the boss is inserted.

During mounting of the chain on the tyre, normally the procedure described below is adopted.

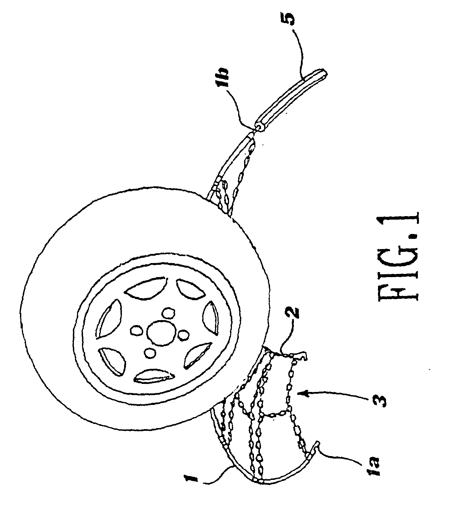

The chain is spread out on the ground with the two internal and external elements parallel and substantially aligned with the direction of travel of the tyre. After which the tyre is dragged manually behind the tyre so that the two ends of the internal element are located, within the reach of the user, on either side of the tyre hub (Fig. 1). At this point the two ends of the internal element, which are provided with the respective portions of the clamping means, are raised and clamped above the tyre.

Once closed in a loop, the internal element is slid behind the tyre and the same procedure is adopted for closing the external element and then the chain is tensioned around the tyre.

However, any motorist will have experienced the difficulties which can be encountered during clamping of the internal element, in particular in poor lighting conditions or when the ground is covered with snow.

In fact, when performing this operation, often two types of problem are encountered.

Firstly, even when the internal element is made with a semi-rigid cable, handling thereof is not very easy and it is therefore not possible to keep control over its end; in fact the end is often difficult to locate behind the tyre and sometimes, owing to its small dimensions, tends to get wedged under the tyre or embedded in the snow, therefore preventing the motorist from seeing it or gripping it.

Moreover, precisely because it is not possible to keep control over the position of the end at all times - either because it is lying flat on the ground or because it is hidden behind the tyre - very often said end finishes up inside the large rhombus-shaped links defined by the transverse chain elements or accidentally becomes engaged with the individual chain links; in any case this gives rise to undesirable tangles which are difficult to eliminate, especially in the case of inexpert users or in adverse weather conditions (for example in freezing conditions which require one to wear bulky protective gloves).

The object of the present model is to overcome the abovementioned drawbacks. In particular it is intended to provide a chain provided with a device which facilitates mounting thereof, preventing it from becoming entangled, and which is both low-cost and straightforward to use.

This object is achieved by means of a skid chain for tyres, provided with a mounting extension device as defined in the accompanying main claims.

Further characteristic features and advantages of the device according to the invention will emerge, however, more clearly from the detailed description which follows, provided by way of example and illustrated in the accompanying drawings, in which:

Fig. 1, as already mentioned, is a perspective view which shows a tyre and a snow chain according to the invention during mounting;

Fig. 2A is a perspective view of the extension device according to the invention;

Fig. 2B is a cross-sectional view of an extension device according to the invention;

Figs. 3A and 3B are plan views, on a scale of 1:2, of the procedure for fastening the extension device to an end section of the snow chain;

Fig. 4 is a plan view corresponding to Fig. 3A, where the snow chain is shown in full.

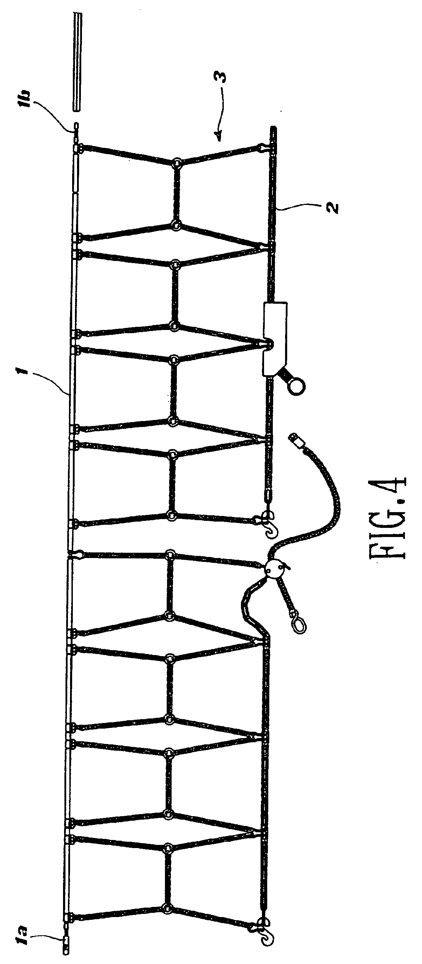

A skid chain for tyres is comprised, in a manner known per se, of an internal element 1 and an external element 2, which can be closed in a loop and between which a plurality of transverse gripping elements 3 extend (Fig. 4).

The external element 2 is provided with a series of devices for clamping and tensioning the chain, which will not be described in detail since they are not relevant for the purposes of the present description.

The internal element 1, which usually consists of a lined flexible steel cable, onto which the ends of the transverse elements 3 are secured, terminates in two ends 1a and 1b.

The two ends 1a and 1b are suitably shaped or have clamping means portions which can be coupled such that, once the skid chain has been spread out behind the tyre (Fig. 1), they may be firmly clamped together, after raising them manually above the tyre.

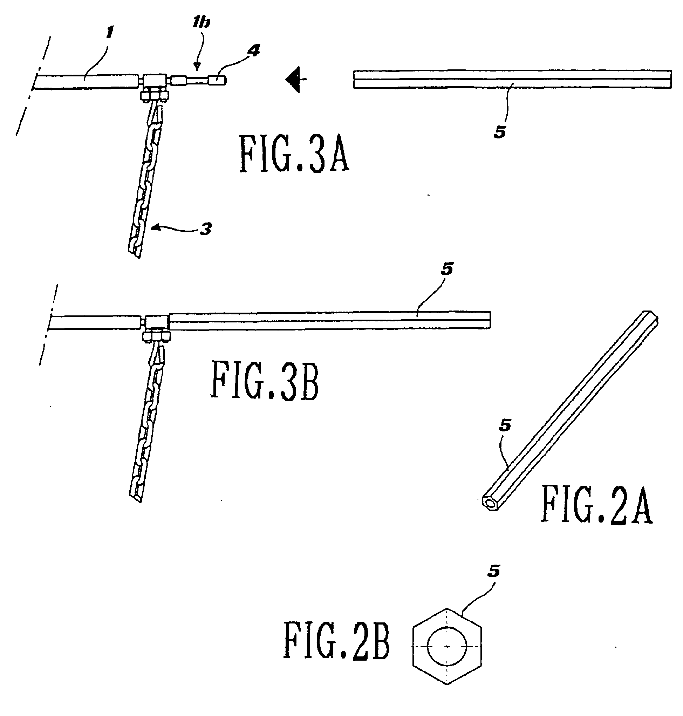

The known arrangements which may be assumed by the ends 1a and 1b are widely varying, depending on the manufacturer or the preferences. Normally one end 1b is provided with a steel boss 4 (Fig. 3A) and the other end la is provided with a corresponding sleeve (not shown in detail) which is partially open and inside which the boss may be transversely inserted: the latter abuts longitudinally inside the sleeve so as not to allow uncoupling of the ends due to the tractional effect which is exerted on the cable 1 during travel of the vehicle.

According to the invention, an extension piece or gripping device 5 is fitted to one of the ends of the internal element, or to both of them.

In the accompanying figures the extension piece is shown in a very simple form, namely a small tube 5 made of semi-rigid material, such as rubber or other suitable plastic material (for example PVC).

Preferably the extension piece has a length variable between 100 mm and 500 mm.

The tube 5 (Figs. 2A and 2B) has a hexagonal cross-section and a cylindrical hole with a diameter ranging between 4 mm and 30 mm depending on the chain used. The internal hole of the tube 5 is designed with dimensions such that it may be engaged by means of force-fitting onto the boss 4 of the end 1b. The force-fitted connection, which may also be achieved thanks to the intrinsic deformability of the material from which the tube 5 is made, is such as to ensure a resistance to uncoupling which is equivalent to at least a couple of KgF, which is indispensable for operation thereof. In fact the extension piece 5 is apt to be engaged with the end of the internal element (Figs. 3A and 3B) so as to act as a temporary gripping element during mounting of the chain.

The extension piece according to the invention, owing to its dimensions and size, is always clearly visible on the ground and may be easily located (Fig. 1), also simply by means of tactile contact, even by an inexpert person.

The intrinsic overall dimensions of the extension piece, moreover, prevents the end of the internal element to which it is fitted from becoming engaged with one of the adjacent rhombus-shaped elements or from being inserted into one of the individual links of the chain. The troublesome possibility of the chain becoming entangled is thus avoided.

Then, once the most difficult stage of mounting has been completed, namely that of encircling the tyre with the internal element, the extension piece according to the invention may be uncoupled (by means of a simple pulling action which requires the application of a force sufficient to overcome the force-fitted connection with the end 1b) and placed back inside the container of the snow chain prior to continuing mounting.

For subsequent mounting of the snow chain, it will be sufficient for the user to ensure engagement beforehand of the extension piece with the internal element in order to be able to take advantage again of its usefulness.

Advantageously the extension piece may be made of a phosphorescent material such that it may be easily located even in poor lighting conditions. A dual result is thus achieved: on the one hand it is favoured the location thereof during mounting and on the other hand it is provided an additional safety signal for the motorist.

It will be clear to a person skilled in the art that the embodiment illustrated is not the sole one which may be derived from the teaching offered by the present invention.

In fact, other types of extension device may be devised with the same utility: for example, an element which is enlarged or formed as a handle or knob possibly terminating in gripper means which may be snap-engaged and disengaged elastically onto/from the end of the internal element 1 of the snow chain. Obviously the greater the constructional complexity the higher will be the manufacturing costs.

## Claims

1. Anti-skid chain for tyres of the type comprising a set of transverse gripping elements (3) connected to an internal element (1) and an external element (2) which may be closed in a loop, **characterized in that** it further has a removable extension device (5) which may be fastened to at least one end (1a;1b) of said internal element (1).

2. Anti-skid chain as in Claim 1), wherein said extension device (5) is engaged by means of force-fitting onto said end (1a;1b) of the internal element (1).

3. Anti-skid chain as in Claim 2), wherein said extension device (5) is in the form of a tubular element made of semi-rigid material.

4. Anti-skid chain as in Claim 3), wherein said tubular element (5) is made of plastic material, such as PVC.

5. Anti-skid chain as in Claim 1), wherein said extension device (5) has gripper means by means of which it can be removably coupled on said end (1a;1b) of the internal element (1).

6. Anti-skid chain as in Claim 5), wherein said gripper means (5) are of the "snap-engagement" type.

7. Anti-skid chain as in any one of the preceding claims, in which said extension device (5) is phosphorescent.

8. Extension device for facilitating gripping of Anti-skid chains for tyres, **characterized in that** it consists of an extension piece (5) which can be removably engaged with one end (1a;1b) of an internal cable (1) of said Anti-skid chain.

9. Device as in Claim 8), wherein said extension piece (5) is a tubular element engageable by means of force-fitting onto said end (1a,1b) of the internal cable (1), prior to mounting of the chain on the tyre, and disengageable before completion of the operation of clamping and closing of the chain on the tyre.

## Patentansprüche

1. Gleitschutzkette für Reifen, der Bauart, die einen Satz von quer angeordneten Greifelementen (3) aufweist, die mit einem inneren Element (1) und einem äußeren Element (2) verbunden sind, die zu einer Schleife geschlossen werden können, **dadurch gekennzeichnet, daß** sie weiterhin eine abnehmbare Verlängerungsvorrichtung (5) aufweist, die an mindestens einem Ende (1a; 1b) des genannten inneren Elements (1) befestigt werden kann.

2. Gleitschutzkette nach Anspruch 1, **dadurch gekennzeichnet, daß** die genannte Verlängerungsvorrichtung (5) durch Aufpressen auf das genannte Ende (1a; 1b) des inneren Elements (1) mit diesem in Eingriff gebracht wird.

3. Gleitschutzkette nach Anspruch 2, **dadurch gekennzeichnet, daß** die genannte Verlängerungsvorrichtung (5) in Form eines rohrförmigen Elements ist, das aus einem halbsteifen Material hergestellt ist.

4. Gleitschutzkette nach Anspruch 3, **dadurch gekennzeichnet, daß** das genannte rohrförmige Element (5) aus Kunststoffmaterial wie etwa PVC hergestellt ist.

5. Gleitschutzkette nach Anspruch 1, **dadurch gekennzeichnet, daß** die genannte Verlängenmgsvorrichtung (5) ein Greifmittel aufweist, mit Hilfe dessen sie abnehmbar mit dem genannten Ende (1a; 1b) des inneren Elements (1) gekoppelt werden kann.

6. Gleitschutzkette nach Anspruch 5, **dadurch gekennzeichnet, daß** das genannte Greifmittel (5) in der Art einer Schnappverriegelung ausgebildet ist.

7. Gleitschutzkette nach einem der vorangehenden Ansprüche, **dadurch gekennzeichnet, daß** die genannte Verlängerungsvorrichtung (5) phosphoreszierend ist.

8. Verlängerungsvorrichtung zum Erleichtern des Greifens von Gleitschutzketten für Reifen, **dadurch gekennzeichnet, daß** sie aus einem Verlängerungsstück (5) besteht, das lösbar mit einem Ende (1a; 1b) eines inneren Seils (1) der genannten Gleitschutzkette in Eingriff bringbar ist.

9. Vorrichtung nach Anspruch 8, **dadurch gekennzeichnet, daß** das genannte Verlängerungsstück (5) ein rohrformiges Element ist, das durch Aufpressen auf das genannte Ende (1a; 1b) des inneren Seils (1) mit diesem in Eingriff bringbar ist, vor dem Anbringen der Kette auf dem Reifen, und vor dem Abschluß der Arbeit des Aufspannens und Schließens der Kette auf dem Reifen lösbar ist.

## Revendications

1. Chaîne anti-patinage pour des pneus du type comprenant un ensemble d'éléments d'adhérence transversaux (3) reliés à un élément interne (1) et un élément externe (2) qui peuvent être fermés en une boucle, **caractérisée en ce qu'**elle comporte en outre un dispositif d'extension amovible (5) qui peut être fixé à au moins une extrémité (1a ; 1b) dudit élément interne (1).

2. Chaîne anti-patinage selon la revendication 1, dans laquelle ledit dispositif d'extension (5) est engagé par un moyen de montage en force sur ladite extrémité (1a ; 1b) de l'élément interne (1).

3. Chaîne anti-patinage selon la revendication 2, dans laquelle ledit dispositif d'extension (5) se présente sous la forme d'un élément tubulaire fait d'un matériau semi-rigide.

4. Chaîne anti-patinage selon la revendication 3, dans laquelle ledit élément tubulaire (5) est fait d'une matière plastique, telle que du PVC.

5. Chaîne anti-patinage selon la revendication 1, dans laquelle ledit dispositif d'extension (5) comporte un moyen de prise au moyen duquel il peut être couplé de manière amovible sur ladite extrémité (1a ; 1b) de l'élément interne (1).

6. Chaîne anti-patinage selon la revendication 5, dans laquelle ledit moyen de saisie (5) est du type à "engagement par encliquetage".

7. Chaîne anti-patinage selon l'une quelconque des revendications précédentes, dans laquelle ledit dispositif d'extension (5) est phosphorescent.

8. Dispositif d'extension destiné à faciliter la saisie de chaînes anti-patinage pour des pneus, **caractérisé en ce qu'**il consiste en un élément d'extension (5) qui peut être engagé de manière amovible avec une extrémité (1a ; 1b) d'un câble interne (1) de ladite chaîne anti-patinage.

9. Dispositif selon la revendication 8, dans lequel ledit élément d'extension (5) est un élément tubulaire pouvant être engagé au moyen d'un ajustement en force sur ladite extrémité (1a ; 1b) du câble interne (1) avant le montage de la chaîne sur le pneu, et peut être désengagé avant l'achèvement de l'opération de serrage et de fermeture de la chaîne sur le pneu.
